# EUROPÄISCHE PATENTSCHRIFT

(11) **EP 2 539 170 B1**
(45) Veröffentlichungstag und Bekanntmachung des Hinweises auf die Patenterteilung: **02.11.2016**
(21) Anmeldenummer: 10795226.9
(22) Anmeldetag: 09.12.2010
(51) Int. Cl.: B60K 6/442, B60K 6/52, B60K 5/02, B60K 6/36, B60K 6/40

(54) **ANTRIEBSSTRANG EINES KRAFTFAHRZEUGS**
DRIVE TRAIN OF A MOTOR VEHICLE
CHAÎNE CINÉMATIQUE DE VÉHICULE À MOTEUR

(30) Priorität: 23.02.2010 DE 102010009874
(43) Veröffentlichungstag der Anmeldung: 02.01.2013
(73) Patentinhaber: Dr.Ing. H.C. F. Porsche Aktiengesellschaft, 70435 Stuttgart (DE)
(72) Erfinder: FUECHTNER, Martin, 70197 Stuttgart (DE); MEYER-EBELING, Joerg, 70197 Stuttgart (DE)
(86) Internationale Anmeldenummer: PCT/EP2010/007498
(87) Internationale Veröffentlichungsnummer: WO 2011/103898

(56) Entgegenhaltungen:
- WO-A1-2007/042109
- WO-A2-2007/118082
- DE-A1- 19 850 549
- DE-A1-102004 058 125
- DE-A1-102005 021 922
- DE-A1-102006 014 514
- DE-A1-102006 026 916
- US-A1- 2009 093 337
- US-A1- 2009 242 289

## Beschreibung

Die Erfindung betrifft einen Antriebsstrang eines Kraftfahrzeugs gemäß dem Oberbegriff des Patentanspruchs 1.

Aus der DE 10 2006 026 916 A1 ist ein Antriebsstrang eines Kraftfahrzeugs mit einer Vorderachse und einer Hinterachse bekannt, wobei die Vorderachse von einem der Vorderachse zugeordneten Elektroantrieb und die Hinterachse von einer der Hinterachse zugeordneten Brennkraftmaschine antreibbar ist. Die der Hinterachse zugeordnete Brennkraftmaschine ist in Mittelmotoranordnung hinter der Vorderachse und vor der Hinterachse positioniert und treibt in die Hinterachse über ein Getriebe ein, welches hinter der Hinterachse positioniert ist. Der Elektroantrieb, welcher der Vorderachse zugeordnet ist, kann eine einzige elektrische Maschine oder je Vorderrad eine separate, elektrische Maschine aufweisen.

Beim Antriebsstrang gemäß der DE 10 2006 026 916 A1 kann die Vorderachse ausschließlich elektromotorisch und die Hinterachse ausschließlich verbrennungsmotorisch angetrieben werden.

Hiervon ausgehend liegt der vorliegenden Erfindung das Problem zu Grunde einen neuartigen Antriebsstrang eines Kraftfahrzeugs zu schaffen. Dieses Problem wird durch einen Antriebsstrang gemäß Patentanspruch 1 gelöst. Erfindungsgemäß ist der Hinterachse ein weiterer Elektroantrieb zugeordnet, über welchen die Hinterachse zusätzlich oder alternativ zur Brennkraftmaschine antreibbar ist.

Die zugehörige elektrische Maschine ist in das Getriebe integriert, das seinerseits als auf der Hinterachse sitzendes Doppelkupplungsgetriebe mit etwa senkrecht zur Hinterachse verlaufenden Wellen ausgebildet ist. Beim erfindungsgemäßen Antriebsstrang kann die Hinterachse sowohl verbrennungsmotorisch als auch elektromotorisch angetrieben werden. Hierzu ist der Hinterachse zusätzlich zur Brennkraftmaschine ein Elektroantrieb zugeordnet. Über den der Hinterachse zugeordneten Elektroantrieb kann die Hinterachse zusätzlich zur Brennkraftmaschine oder alternativ zur Brennkraftmaschine angetrieben werden. Beim erfindungsgemäßen Antriebsstrang erfolgt der Antrieb der Vorderachse demnach rein elektromotorisch. Der Antrieb der Hinterachse kann rein elektromotorisch, rein verbrennungsmotorisch oder in Kombination verbrennungs- und elektromotorisch erfolgen.

Vorzugsweise umfasst der Elektroantrieb, welcher der Vorderachse zugeordnet ist, eine erste elektrische Maschine, die einem ersten Vorderrad der Vorderachse zugeordnet ist, und zweite elektrische Maschine, die einem zweiten Vorderrad der Vorderachse zugeordnet ist, wobei diese elektrischen Maschinen des die Vorderachse antreibenden Elektroantriebs über eine Einrichtung miteinander koppelbar sind. Die dem ersten Vorderrad zugeordnete, erste elektrische Maschine des Elektroantriebs der Vorderachse dient dem Antreiben des ersten Vorderrads und die dem zweiten Vorderrad zugeordnete, zweite elektrische Maschine des Elektroantriebs der Vorderachse dient dem Antreiben des zweiten Vorderrads. Dann, wenn die beiden elektrischen Maschinen koppelbar sind, kann bei Ausfall einer elektrischen Maschine des Elektroantriebs der Vorderachse ein Antrieb beider Vorderräder mithilfe der verbleibenden elektrischen Maschine des Elektroantriebs der Vorderachse erfolgen.

Nach einer vorteilhaften Weiterbildung der Erfindung ist das Getriebe, über welches die Brennkraftmaschine und der Elektroantrieb der Hinterachse die Hinterachse antreiben, als Doppelkupplungsgetriebe mit zwei Getriebeeingangswellen und zwei Anfahrkupplungen ausgebildet, wobei der Elektroantrieb, welcher der Hinterachse zugeordnet ist, mindestens eine elektrische Maschine umfasst, die in das Getriebe integriert ist, und wobei die Brennkraftmaschine und die in das Doppelkupplungsgetriebe integrierte elektrische Maschine des der Hinterachse zugeordneten Elektroantriebs jeweils in unterschiedliche Getriebeeingangswellen des Doppelkupplungsgetriebes eintreiben. Die Integration der elektrischen Maschine des der Hinterachse zugeordneten Elektroantriebs in das Doppelkupplungsgetriebe verfügt über den Vorteil, dass Bauraum eingespart werden kann. Durch die Ausführung des Getriebes als Doppelkupplungsgetriebe sowie dadurch, dass die Brennkraftmaschine und die in das Doppelkupplungsgetriebe integrierte, elektrische Maschine in unterschiedliche Eingangswellen des Doppelkupplungsgetriebes eintreiben, kann ein höchsten Leistungsanforderungen gerecht werdender Antriebsstrang bereitgestellt werden, der darüberhinaus im Hinblick auf einen minimalen Schadstoffausstoß ausgelegt ist.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine schematisierte Darstellung eines erfindungsgemäßen Antriebsstrangs eines Kraftfahrzeugs;
- Fig. 2: eine Alternative für die Hinterachse des erfindungsgemäßen Antriebsstrangs der Fig. 1; und
- Fig. 3: eine Alternative für die Vorderachse des erfindungsgemäßen Antriebsstrangs der Fig. 1.

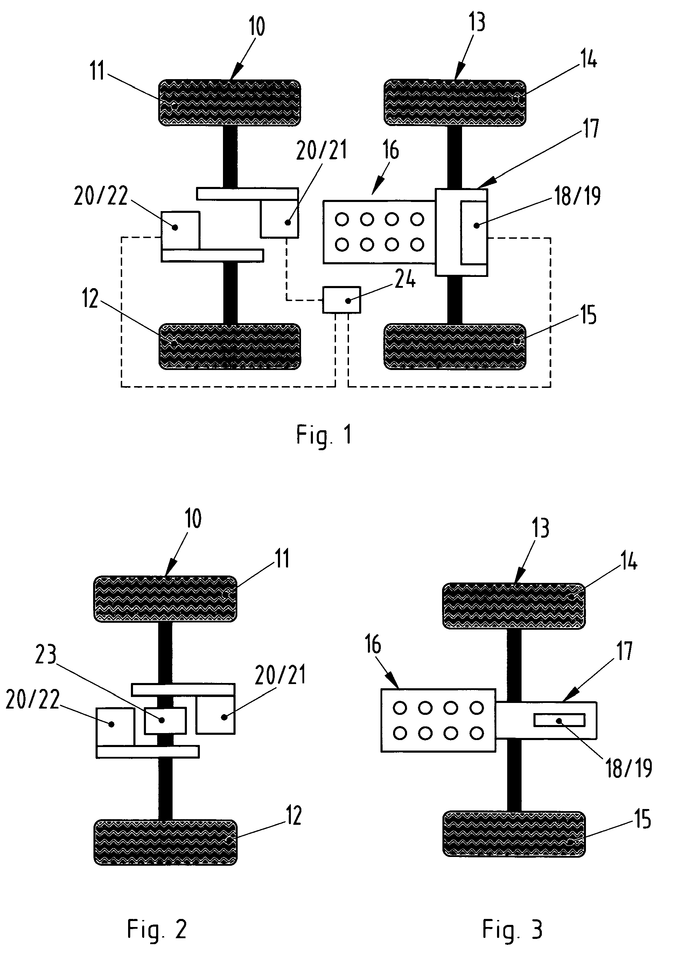

Die hier vorliegende Erfindung betrifft einen Antriebsstrangs eines Kraftfahrzeugs, wobei Fig. 1 stark schematisiert ein bevorzugtes Ausführungsbeispiel eines erfindungsgemäßen Antriebsstrangs zeigt.

Der erfindungsgemäße Antriebsstrang verfügt über eine Vorderachse 10 mit Vorderrädern 11, 12 und über eine Hinterachse 13 mit Hinterrädern 14, 15. Der Hinterachse 13 ist eine Brennkraftmaschine 16 zugeordnet, die in Mittelmotoranordnung hinter der Vorderachse 10 und vor der Hinterachse 13 positioniert ist, und die über ein Getriebe 17 die Hinterachse 13 antreibt. Bei der Brennkraftmaschine 16 handelt es sich um eine Otto-Brennkraftmaschine, nämlich im gezeigten Ausführungsbeispiel um eine 8-Zylinder-Otto-Brennkraftmaschine in V-Bauweise.

Beim Getriebe 17, über welches die Brennkraftmaschine 16 die Hinterachse 13 antreibt, handelt es sich um ein Doppelkupplungsgetriebe. Der prinzipielle Aufbau von Doppelkupplungsgetrieben ist dem hier angesprochenen Fachmann geläufig und bedarf keiner näheren Erläuterung. Der prinzipielle Aufbau von Doppelkupplungsgetrieben ist z. B. aus der WO 2007/042109 A1 bekannt, aus welcher hervorgeht, dass ein Doppelkupplungsgetriebe über zwei Getriebeeingangswellen und zwei Anfahrkupplungen verfügt.

Der Hinterachse 13 ist zusätzlich zur Brennkraftmaschine 16 ein Elektroantrieb 18 zugeordnet, über welchen die Hinterachse 13 zusätzlich oder alternativ zur Brennkraftmaschine 16 antreibbar ist. Der Elektroantrieb 18 der Hinterachse 13 verfügt über mindestens eine elektrische Maschine, im gezeigten Ausführungsbeispiel über eine einzige elektrische Maschine 19, die in das als Doppelkupplungsgetriebe ausgebildete Getriebe 17 integriert ist. Vorzugsweise treiben dabei die Brennkraftmaschine 16 und die in das Doppelkupplungsgetriebe 17 integrierte, elektrische Maschine 19 des Elektroantriebs 18 in unterschiedliche Eingangswellen des Doppelkupplungsgetriebes 17 ein.

Obwohl das Eintreiben der Brennkraftmaschine 16 sowie der elektrischen Maschine 19 des Elektroantriebs 18 der Hinterachse 19 in unterschiedliche Getriebeeingangswellen des als Doppelkupplungsgetriebe ausgebildeten Getriebes 17 antriebstechnisch besonders bevorzugt ist, ist es alternativ auch möglich, dass Brennkraftmaschine 16 und elektrische Maschine 19 gemeinsam in eine Getriebeeingangswelle des Doppelkupplungsgetriebes eintreiben.

Im Ausführungsbeispiel der Fig. 1 ist das Getriebe 17 in Querbauweise ausgeführt und demnach als Quergetriebe ausgebildet, dessen Wellen in etwa parallel zur Hinterachse 13 verlaufen. Im Unterschied hierzu ist es auch möglich, wie Fig. 3 entnommen werden kann, dass das Getriebe 17, welches als Doppelkupplungsgetriebe ausgebildet ist, in Längsbauweise ausgeführt und demnach als Längsgetriebe ausgebildet ist, dessen Wellen in etwa senkrecht zur Hinterachse 13 verlaufen. In jedem Fall sitzt das Getriebe zumindest abschnittsweise auf der Hinterachse 13.

Der Vorderachse 10 des Antriebsstrangs ist ebenfalls ein Elektroantrieb 20 zugeordnet, wobei der Elektroantrieb 20 der Vorderachse 10 mehrere, nämlich im gezeigten Ausführungsbeispiel zwei, elektrische Maschinen 21 und 22 umfasst.

So ist eine erste elektrische Maschine 21 des Elektroantriebs 20 der Vorderachse 10 einem ersten Vorderrad 11 und eine zweite elektrische Maschine 22 des Elektroantriebs 20 der Vorderachse 10 einem zweiten Vorderrad 12 zugeordnet. Im Ausführungsbeispiel der Fig. 1 dient dabei die elektrische Maschine 21 des Elektroantriebs 20 ausschließlich dem Antreiben des Vorderrads 11 und die elektrische Maschine 22 des Elektroantriebs 20 der Vorderachse 10 ausschließlich dem Abtrieben des Vorderrads 12.

Nach einer bevorzugten Weiterbildung der Erfindung ist es jedoch auch möglich, wie in Fig. 2 gezeigt, dass die beiden elektrischen Maschinen 22 und 21 des Elektroantriebs 20 der Vorderachse 10 über eine Einrichtung 23 koppelbar sind. In diesem Fall ist es dann möglich, bei Ausfall einer der elektrischen Maschinen 21 bzw. 22 des Elektroantriebs 20 der Vorderachse 10 beide Vorderräder 11, 12 der Vorderachse 10 von der jeweils verbleibenden, funktionstüchtigen elektrischen Maschinen 21 bzw. 22 des Elektroantriebs 20 der Vorderachse 10 aus anzutreiben.

Bei der Einrichtung 23, über welche die beiden elektrischen Maschinen 21 und 22 des Elektroantriebs 20 der Vorderachse 10 koppelbar sind, kann es sich um eine Kupplung handeln. In diesem Fall werden dann die beiden Vorderräder 11, 12 der Vorderachse 10 jeweils mit gleichen Drehzahlen angetrieben.

Im Unterschied hierzu ist es jedoch auch möglich, dass die Einrichtung 23, über welche die beiden elektrischen Maschinen 21 und 22 des Elektroantriebs 20 der Vorderachse 10 koppelbar sind, als mechanisches Differenzial oder als elektrisches Differenzial ausgebildet ist.

Dann, wenn die Einrichtung 23 als mechanisches Differenzial ausgebildet ist, können die beiden Vorderräder 11, 12 der Vorderachse 10 bei gekoppelten elektrischen Maschinen 21 und 22 mit unterschiedlichen Drehzahlen angetrieben werden, an derselben liegt jedoch ein Antriebsmoment mit identischem Vorzeichen, also entweder jeweils ein Zugmoment oder ein Schubmoment, an.

Dann hingegen, wenn die Einrichtung 23 als elektrisches Differenzial ausgeführt ist, können die beiden Vorderräder 11, 12 nicht nur mit unterschiedlichen Drehzahlen angetrieben werden, sondern vielmehr ist es auch möglich, an den beiden Vorderrädern 11, 12 Momente mit unterschiedlichen Vorzeichen anzulegen, also an einem Vorderrad ein Zugmoment und an einem anderen Vorderrad ein Schubmoment.

Sowohl die beiden elektrischen Maschinen 21 und 22 des Elektroantriebs 20 der Vorderachse 10 als auch die elektrische Maschine 19 des Elektroantriebs 18 der Hinterachse 13 können jeweils motorisch oder generatorisch betrieben werden. Gemäß Fig. 1 ist dabei allen elektrischen Maschinen 19, 21 und 22 der Elektroantriebe 18 und 20 von Hinterachse 13 und Vorderachse 10 ein gemeinsamer elektrischer Energiespeicher 24 zugeordnet, wobei dann, wenn eine der elektrischen Maschinen 19 bzw. 21 bzw. 22 motorisch betrieben wird, dieselbe den elektrischen Energiespeicher 24 stärker entlädt, und dann, wenn eine der elektrischen Maschinen 19 bzw. 21 bzw. 22 generatorisch betrieben wird, dieselbe den elektrischen Energiespeicher 24 stärker auflädt.

Im Unterschied hierzu ist es auch möglich, dem Elektroantrieb 18 der Hinterachse 13 und dem Elektroantrieb 20 der Vorderachse 10 getrennte, elektrische Energiespeicher zuzuordnen.

Bei dem oder jedem elektrischen Energiespeicher handelt es sich entweder um eine Batterie oder um einen Schwungradspeicher. Ein Schwungradspeicher kommt dann zum Einsatz, wenn Schwerpunkt auf ein performantes bzw. leistungsorientiertes Verhalten des Antriebsstrangs gelegt wird. Eine Batterie kommt dann zum Einsatz, wenn Schwerpunkt auf einen minimierten Kraftstoffverbrauch bzw. maximierte Reichweite des Antriebsstrangs gelegt wird.

## Patentansprüche

1. Antriebsstrang eines Kraftfahrzeugs, mit einer Vorderachse, mit einer Hinterachse, mit einer Brennkraftmaschine, die hinter der Vorderachse und vor der Hinterachse in Mittelmotoranordnung positioniert ist, mit einem Getriebe, über welches die Brennkraftmaschine die Hinterachse antreibt, und mit einem der Vorderachse zugeordneten, mindestens zwei elektrische Maschinen umfassenden Elektroantrieb, über welchen die Vorderachse antreibbar ist, **dadurch gekennzeichnet, dass** der Hinterachse (13) ein weiterer Elektroantrieb (18) zugeordnet ist, über welchen die Hinterachse (13) zusätzlich oder alternativ zur Brennkraftmaschine (16) antreibbar ist, wobei der Elektroantrieb (18), welcher der Hinterachse (13) zugeordnet ist, mindestens eine elektrische Maschine (19) umfasst, die in das Getriebe (17) integriert ist, wobei das Getriebe (17), über welches die Brennkraftmaschine (16) und der Elektroantrieb (18) der Hinterachse (13) die Hinterachse (13) antreiben, auf der Hinterachse (13) sitzt und als Längsgetriebe ausgebildet ist, dessen Wellen in etwa senkrecht zur Hinterachse (13) verlaufen, und wobei das Getriebe (17) als Doppelkupplungsgetriebe ausgebildet ist.

2. Antriebsstrang nach Anspruch 1 , **dadurch gekennzeichnet, dass** das Getriebe (17), über welches die Brennkraftmaschine (16) und der Elektroantrieb (18) der Hinterachse (13) die Hinterachse (13) antreiben, als Doppelkupplungsgetriebe mit zwei Getriebeeingangswellen und zwei Anfahrkupplungen ausgebildet ist.

3. Antriebsstrang nach Anspruch 2, **dadurch gekennzeichnet, dass** die Brennkraftmaschine (16) und die elektrische Maschine (19) des der Hinterachse (13) zugeordneten Elektroantriebs (18) jeweils in unterschiedliche Getriebeeingangswellen des Doppelkupplungsgetriebes eintreiben.

4. Antriebsstrang nach einem der Ansprüche 1 bis 3, **dadurch gekennzeichnet, dass** der Elektroantrieb (20), welcher der Vorderachse (10) zugeordnet ist, eine erste elektrische Maschine (21), die einem ersten Vorderrad (11) der Vorderachse (10) zugeordnet ist, und zweite elektrische Maschine (22), die einem zweiten Vorderrad (12) der Vorderachse (10) zugeordnet ist, umfasst, wobei diese elektrischen Maschinen (21, 22) des die Vorderachse (10) antreibenden Elektroantriebs (20) über eine Einrichtung (23) miteinander koppelbar sind.

5. Antriebsstrang nach Anspruch 4, **dadurch gekennzeichnet, dass** die Einrichtung (23) als Kupplung ausgebildet ist.

6. Antriebsstrang nach Anspruch 4, **dadurch gekennzeichnet, dass** die Einrichtung (23) als mechanisches Differenzial ausgebildet ist.

7. Antriebsstrang nach Anspruch 4, **dadurch gekennzeichnet, dass** die Einrichtung (23) als elektrisches Differenzial ausgebildet ist.

8. Antriebsstrang nach einem der Ansprüche 1 bis 7, **dadurch gekennzeichnet, dass** das Getriebe (17), über welches die Brennkraftmaschine (16) und der Elektroantrieb (18) der Hinterachse (13) die Hinterachse (13) antreiben, auf der Hinterachse (13) sitzt und als Quergetriebe ausgebildet ist, dessen Wellen in etwa parallel zur Hinterachse (13) verlaufen.

## Claims

1. Drive train of a motor vehicle, having a front axle, having a rear axle, having an internal combustion engine which is positioned behind the front axle and in front of the rear axle in a mid-engine arrangement, having a transmission, by means of which the internal combustion engine drives the rear axle, and having an electric drive which is assigned to the front axle and comprises at least two electric machines and by means of which the front axle can be driven, **characterized in that** the rear axle (13) is assigned a further electric drive (18) by means of which the rear axle (13) can be driven in addition to or as an alternative to the internal combustion engine (16), wherein the electric drive (18) which is assigned to the rear axle (13) comprises at least one electric machine (19) which is integrated into the transmission (17), wherein the transmission (17) by means of which the internal combustion engine (16) and the electric drive (18) of the rear axle (13) drive the rear axle (13) is seated on the rear axle (13) and is embodied as a longitudinal transmission whose shafts extend approximately perpendicularly with respect to the rear axle (13), and wherein the transmission (17) is embodied as double-clutch transmission.

2. Drive train according to Claim 1, **characterized in that** the transmission (17) by means of which the internal combustion engine (16) and the electric drive (18) of the rear axle (13) drive the rear axle (13) is embodied as double-clutch transmission with two transmission input shafts and two starter clutches.

3. Drive train according to Claim 2, **characterized in that** the internal combustion engine (16) and the electric machine (19) of the electric drive (18) which is assigned to the rear axle (13) each input drive into different transmission input shafts of the double-clutch transmission.

4. Drive train according to one of Claims 1 to 3, **characterized in that** the electric drive (20) which is assigned to the front axle (10) comprises a first electric machine (21), which is assigned to a first front wheel (11) of the front axle (10), and a second electric machine (22), which is assigned to a second front wheel (12) of the front axle (10), wherein these electric machines (21, 22) of the electric drive (20) which drives the front axle (10) can be coupled to one another via a device (23) .

5. Drive train according to Claim 4, **characterized in that** the device (23) is embodied as a clutch.

6. Drive train according to Claim 4, **characterized in that** the device (23) is embodied as a mechanical differential.

7. Drive train according to Claim 4, **characterized in that** the device (23) is embodied as an electrical differential.

8. Drive train according to one of Claims 1 to 7, **characterized in that** the transmission (17) by means of which the internal combustion engine (16) and the electric drive (18) of the rear axle (13) drive the rear axle (13), is seated on the rear axle (13) and is embodied as a transverse transmission whose shafts extend approximately parallel with respect to the rear axle (13).

## Revendications

1. Train d'entraînement pour véhicule automobile qui présente un essieu avant, un essieu arrière, un moteur à combustion interne disposé à l'arrière de l'essieu avant et à l'avant de l'essieu arrière dans un agencement central de moteur, une transmission par laquelle le moteur à combustion interne entraîne l'essieu arrière et un entraînement électrique comprenant au moins deux machines électriques, associé à l'essieu avant et par lequel l'essieu avant peut être entraîné,
**caractérisé en ce que**
un deuxième entraînement électrique (18) par lequel l'essieu arrière (13) peut être entraîné en plus ou en variante du moteur (16) à combustion interne est associé à l'essieu arrière (13),
**en ce que** l'entraînement électrique (18) associé à l'essieu arrière (13) comporte au moins une machine électrique (19) intégrée dans la transmission (17),
**en ce que** la transmission (17) par l'intermédiaire de laquelle le moteur (16) à combustion interne et l'entraînement électrique (18) de l'essieu arrière (13) entraînent l'essieu arrière (13) est située sur l'essieu arrière (13) et est configurée comme transmission longitudinale dont les arbres s'étendent sensiblement à la perpendiculaire de l'essieu arrière (13) et
**en ce que** la transmission (17) est configurée comme transmission à double embrayage.

2. Train d'entraînement selon la revendication 1, **caractérisé en ce que** la transmission (17) par laquelle le moteur (16) à combustion interne et l'entraînement électrique (18) de l'essieu arrière (13) entraînent l'essieu arrière (13) est configurée comme transmission à double embrayage dotée de deux arbres d'entrée de transmission et de deux embrayages de démarrage.

3. Train d'entraînement selon la revendication 2, **caractérisé en ce que** le moteur (16) à combustion interne et la machine électrique (19) de l'entraînement électrique (18) associé à l'essieu arrière (13) engagent chacun des arbres d'entrée différents de la transmission à double embrayage.

4. Train d'entraînement selon l'une des revendications 1 à 3, **caractérisé en ce que** l'entraînement électrique (20) associé à l'essieu avant (10) comporte une première machine électrique (21) associée à une première roue avant (11) de l'essieu avant (10) et une deuxième machine électrique (22) associée à une deuxième roue avant (12) de l'essieu avant (10), ces machines électriques (21, 22) de l'entraînement électrique (20) entraînant l'essieu avant (10) pouvant être accouplées l'une à l'autre au moyen d'un dispositif (23).

5. Train d'entraînement selon la revendication 4, **caractérisé en ce que** le dispositif (23) est configuré comme embrayage.

6. Train d'entraînement selon la revendication 4, **caractérisé en ce que** le dispositif (23) est configuré comme différentiel mécanique.

7. Train d'entraînement selon la revendication 4, **caractérisé en ce que** le dispositif (23) est configuré comme différentiel électrique.

8. Train d'entraînement selon l'une des revendications 1 à 7, **caractérisé en ce que** la transmission (17) par laquelle le moteur (16) à combustion interne et l'entraînement électrique (18) de l'essieu arrière (13) entraînent l'essieu arrière (13) est placé sur l'essieu arrière (13) et est configurée comme transmission transversale dont les arbres s'étendent sensiblement en parallèle à l'essieu arrière (13).
